# NEUE EUROPÄISCHE PATENTSCHRIFT

(11) **EP 1 682 437 B2**
(45) Veröffentlichungstag und Bekanntmachung des Hinweises auf die Entscheidung über den Einspruch: **19.12.2012**
(45) Hinweis auf die Patenterteilung: 27.02.2008
(21) Anmeldenummer: 04786723.9
(22) Anmeldetag: 07.09.2004
(51) Int. Cl.: B65G 39/09

(54) **ROLLE FÜR EINEN FÖRDERER, INSBESONDERE GURT- ODER BANDFÖRDERER**
ROLLER FOR A CONVEYOR, PARTICULARLY A BELT OR BAND CONVEYOR
ROULEAU POUR CONVOYEUR, NOTAMMENT CONVOYEUR A COURROIE OU BANDE TRANSPORTEUSE

(30) Priorität: 10.09.2003 DE 10342099
(43) Veröffentlichungstag der Anmeldung: 26.07.2006
(73) Patentinhaber: Sandvik Mining and Construction Supply GmbH, 38170 Schöppenstedt (DE)
(72) Erfinder: HOFMAYER, Bernhard, 38170 Schöppenstedt (DE); KUHFUSS, Bernd, 28359 Bremen (DE)
(74) Vertreter: Rehmann, Thorsten
(86) Internationale Anmeldenummer: PCT/DE2004/002001
(87) Internationale Veröffentlichungsnummer: WO 2005/023687

(56) Entgegenhaltungen:
- DE-A- 2 723 808
- DE-A- 19 833 114
- DE-A1- 2 827 365
- DE-A1- 3 024 750
- DE-C1- 4 431 517
- DE-C1- 19 607 010
- DE-U- 7 204 154
- DE-U- 7 216 869
- DE-U- 9 403 168
- GB-A- 232 854
- GB-A- 2 174 476
- US-A- 1 919 495
- US-A- 1 958 412
- US-A- 2 030 818
- US-A- 2 446 616
- US-A- 4 174 031
- US-A- 4 183 589
- US-A- 4 311 226
- US-A- 4 339 158
- US-E- R E22 465

## Beschreibung

Die Erfindung betrifft eine Rolle für einen Förderer, insbesondere Gurt- oder Bandförderer, mit einem hohlzylindrischen Rollenkörper und einer in mindestens zwei Lagern gelagerten Achswelle, wobei die Lager in je einem Lagersitz angeordnet sind.

Eine Vielzahl solcher Rollen werden parallel nebeneinander in ein Gestell eingesetzt. Über diese Rollen läuft der Fördergurt. Für das Fördern von Schüttgut, beispielsweise im Bergbau, werden jeweils 3 Rollen zueinander V-förmig angeordnet, so dass der Gurt eine Wanne ausbildet. Die Länge solcher Förderer beträgt bis zu mehreren Kilometern. Ein Beispiel für derartige Rollen, die V-förmig angeordnet sind, ist in der US 1,958,412 A offenbart. Dort ist vorgesehen, dass ein unter Druck stehendes Schmiermittel durch eine hohle Achswelle von einem seitlichen Anschlag zu den Lagern und weiter zu der Achswelle einer benachbarten Rolle gefördert wird.

Durch das hohe Gewicht des Fördergutes müssen die Rollen stabil ausgebildet sein. In den hohlzylindrischen Rollenkörper werden an seinen Enden je ein Lagerhalter eingesetzt, in dem ein Sitz für ein Wälzlager ausgebildet ist. Der Lagerhalter wird dann mit der Innenwandung des Rollenkörpers verschweißt. Durch den Temperatureintrag beim Einschweißen des Lagerhalters verzieht sich die Wandung des Rollenkörpers und auch der Lagersitz, so dass sowohl der Rollenkörper als auch der Lagersitz nachbearbeitet werden müssen. Damit ausreichend hohe Kräfte übertragen werden können, müssen die Lagerhalter sehr stabil ausgebildet sein. Das Einschweißen der Lagerhalter muss sehr sorgfältig erfolgen, damit später ein guter Rundlauf der Rolle erzielt wird. Die Fertigung einer solchen Rolle ist durch die verschiedenen Bearbeitungsschritte sehr zeitaufwändig und damit kostenträchtig. Aufgrund der hohen zu übertragenden Kräfte muss die Rolle auch entsprechend stabil mit recht hohen Wandstärken ausgebildet sein, so dass sie entsprechend schwer ist. Das Gewicht einer Rolle ist bei der Auslegung des Förderers eine nicht unbeachtliche Größe, insbesondere wenn die Förderstrecke mehrere Kilometer beträgt. Da die Rollen in Drehung versetzt werden müssen, muss das Antriebssystem entsprechend leistungsstark ausgebildet sein.

Von dieser Problemstellung ausgehend soll die eingangs beschriebene Rolle verbessert werden. Insbesondere soll ihre Herstellung vereinfacht und ihr Gewicht reduziert werden.

Zur Problemlösung zeichnet sich eine gattungsgemäße Rolle dadurch aus, dass zur Ausbildung der Lagersitze die Wandung des Rollenkörpers an seinen beiden Enden durch Fließrollen axial nach innen umgeformt ist, und dass die axialen Enden der nach innen umgeformten Wandung nach radial außen aus laufen und so einen Stützring aus bilden.

Durch diese Ausgestaltung wird die Stabilität gegen Biegung erhöht und es entfallen die beiden Lagerhalter, wodurch nicht nur das Gewicht reduziert wird, sondern auch die Herstellzeit verkürzt wird, da der Arbeitsgang des Einschweißens entfällt. Die Enden sind so nach innen umgeformt, dass zwischen der zylindrischen Wandung und dem eingebogenen Teil der Wandung ein Ringspalt ausgebildet ist, wodurch die Stabilität des Lagersitzes erhöht ist. Das Umformen erfolgt durch Fließrollen, das bekannt ist, um Rohrenden druckdicht zu verschließen oder Hälse anzuformen. Werkzeug und Werkstück werden rotierend angetrieben. Fließrollmaschinen werden beispielsweise von der Firma GFU-Maschinenbau, Bitburg (www.gfu-forming.com) angeboten.

Die Wandstärke der Wandung nimmt im Bereich der Lagersitze zu. Dadurch kann eine weitere Gewichtsoptimierung erfolgen. Die Außenwandung des Rollenkörpers kann so dünn gewählt werden, wie es die Anforderungen, die vom Förderer (Transportlast) vorgegeben werden, zulassen, während die Wandung im Bereich der Lagersitze so dick gewählt wird, dass die Lagerkräfte sicher übertragen werden. Im Bereich der Lagersitze ist die Wandstärke insbesondere vorzugsweise mindestens verdoppelt. Gegenüber herkömmlichen Rollen wird mit dieser Ausgestaltung ein Gewicht bis zu 25 kg eingespart, was bezogen auf die Gesamtanzahl der in einem langen Fördersystem vorhandenen Rollen dazu führt, dass die zum Betrieb des Förderers notwendige Antriebseinheit deutlich weniger Leistung zur Verfügung stellen muss.

Die Lagersitze werden nach dem Umformen spanabhebend bearbeitet. In die Lagersitze können dann handelsübliche Wälzlager eingepresst werden.

Zur weiteren Gewichtsoptimierung ist die Achswelle vorzugsweise hohl ausgebildet. Wenn die Achswelle mindestens eine radiale Bohrung aufweist, ist ein einfacher Luftaustausch zwischen dem Inneren des Rollenkörpers und der Atmosphäre möglich. Der notwendiger Luftaustausch beruht aufTemperaturunterschieden, die durch den Betrieb des Förderers entstehen. Die Rolle erwärmt sich. Die im Inneren des Rollkkörpers eingeschlossene Luft dehnt sich aus. Wird der Förderer stillgesetzt, kühlt sich die Rolle ab und die eingeschlossene Luft zieht sich zusammen. Durch die Bohrung in der Rollenachse ist der Luftaustausch nicht nur schnell möglich, sondern es ist auch sichergestellt, dass die Luft nicht durch die Wälzlager strömt und Verunreinigungen mitzieht, die die Lebensdauer der Lager reduzieren.

Zum einfachen Einbau der Rolle in das Gestell weisen die Enden der Achswelle vorzugsweise mindestens zwei diametrale Abflachungen (Zweikant) auf. Die Wandung der Achswelle verläuft zwischen zwei Abflachungen vorzugsweise zumindest einseitig schräg nach radial innen.

Zum Auswuchten der Rolle wird der hohlzylindrische Rollenkörper zunächst von außen überdreht, um einen konstanten Außendurchmesser zu erhalten und dann ein Polyurethanschaum in das Innere eingesprüht und die Rolle in Rotation versetzt. Der Schaum legt sich aufgrund der Fliehkräfte über die volle axiale Länge an der Innenwandung an. Die Schichtdicke des Schaumes nimmt im Bereich der Unwucht zu bzw. ab, so dass die Unwucht ausgeglichen wird. Nach einer gewissen Zeit härtet der Schaum aus und der Rollenkörper ist mit hoher Genauigkeit dauerhaft ausgewuchtet. Durch dieses Verfahren ist eine rasche und einfache Auswuchtung möglich, was die Herstellzeit für die Rolle weiter reduziert. In die Kunststoffschicht können Stahlkugeln wie sie beispielsweise zum Stahlstrahlen verwendet werden - eingebettet sein, wodurch dann auch größere Unwuchten ausgeglichen werden können.

Mit Hilfe einer Zeichnung soll ein Ausführungsbeispiel der Erfindung nachfolgend näher beschrieben werden. Es zeigt:

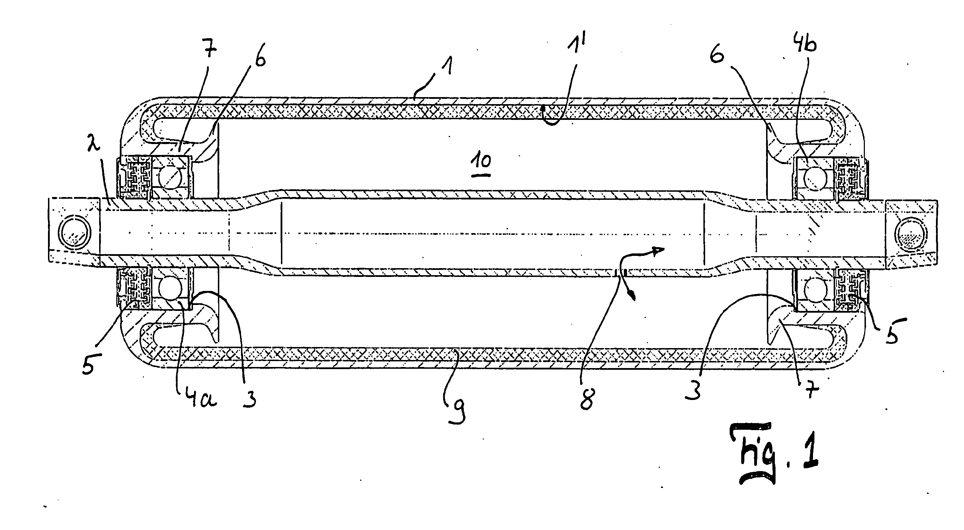

- Figur 1 -: den Längsschnitt durch eine Rolle;

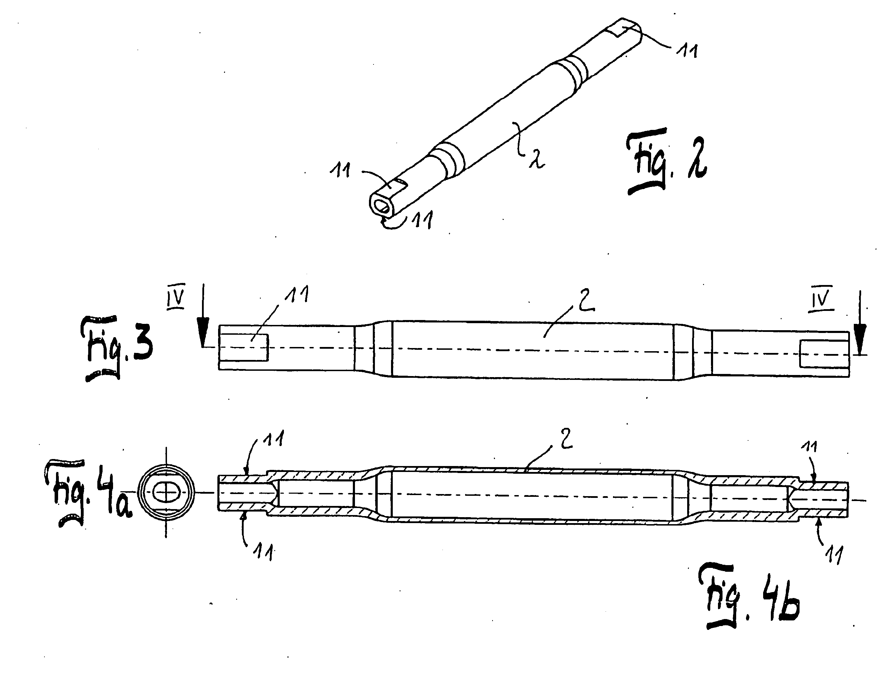

- Figur 2 -: die perspektivische Ansicht einer ersten Achswelle;
- Figur 3 -: die Ansicht der Achswelle nach Figur 2;
- Figur 4a -: die Stirnansicht der Achswelle;
- Figur 4b -: den Schnitt entlang der Linie IV-IV nach Figur 3;
- Figur 5 -: die perspektivische Darstellung einer zweiten Achswelle,
- Figur 6 -: die Ansicht der Achswelle nach Figur 5;
- Figur 7a -: die Stirnansicht der Achswelle;
- Figur 7b -: den Schnitt entlang der Linie VII-VII nach Figur 6;
- Figur 8a -: die vergrößerte Stirnansicht der Achswelle;
- Figur 8b -: die Einzelheit VIII nach Figur 7b;
- Figur 9 -: eine Rolle nach dem Stand der Technik;
- Figur 10 -: die V-förmige Anordnung dreier Rollen zur Ausbildung einer Wanne.

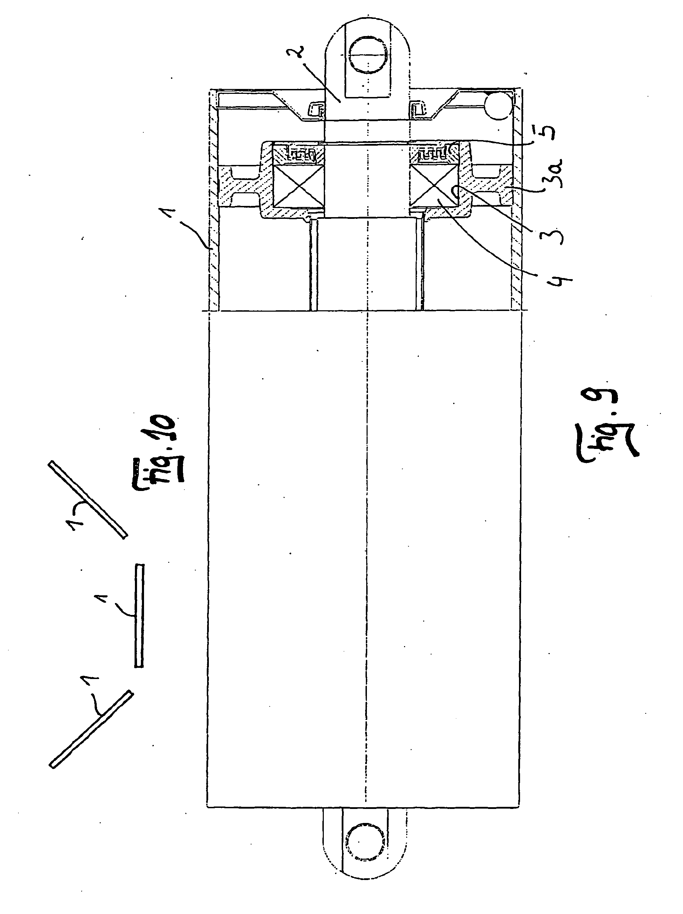

Figur 9 zeigt eine herkömmliche Rolle, wie sie für Band- oder Gurtförderer Verwendung findet, die zum Transport von Schüttgut, wie Erze, Kies oder dergleichen verwendet werden. Solche Anlagen sind mehrere Kilometer lang und weisen eine Vielzahl parallel beabstandeter Rollen auf. Die Gurtbreite beträgt beispielsweise 2300 mm. Zur Ausbildung eines wannenförmigen Gurtes werden drei Rollen in V-Form (vgl. Figur 10) angeordnet. Die Rolle besteht aus dem hohlzylindrischen Rollenkörper 1, der Achswelle 2 und zwei an den Enden des Rollenkörpers 1 eingesetzten und mit der Innenwandung verschweißten Lagerhaltern 3a, in denen ein Sitz 3 für die Wälzlager 4 ausgebildet ist, die nach außen über eine Labyrinthdichtung 5 abgedichtet sind.

Die erfindungsgemäße Rolle besteht aus dem hohlzylindrischen Rollenkörper 1, der hohlen Achswelle 2 und den Wälzlagern 4a, 4b. Die beiden Enden des Rollenkörpers 1 sind durch Fließrollen nach axial innen umgeformt und bilden die Lagesitze 3 aus. Das Umformen der Enden geschieht, indem das den Rollenkörper 1 bildende Metallrohr über einen Innendorn gezogen und induktiv erwärmt wird. Das erwärmte Rohr wird dann in Rotation versetzt und ein entsprechend profiliertes Formwerkzeug fährt rotierend auf das Rohrende auf und bördelt die Wandung nach innen. Das Material der Wandung fließt beim Umformen in radiale Richtung, so dass die Wandstärke der Einstülpung 7 wesentlich größer ist als die Wandstärke des übrigen Rohres. Durch entsprechende Profilierung des Formwerkzeuges wandern beim Umformen die Enden der Einstülpung 7 nach radial außen und bilden einen Stützring 6 aus, durch den die Stabilität gegen Biegung des Rollenkörpers 1 bzw. der Lagersitze 3 erhöht wird. Nach dem Umformen werden in der Einstülpung 7 die Lagersitze 3 gefräst, die die Wälzlager 4a, 4b aufnehmen.

Die Achswelle 2 ist hohl ausgebildet und ihr mittlerer Bereich ist gegenüber den Enden, die in den Wälzlagern 4a, 4b gelagert sind, im Durchmesser größer ausgebildet. In dem durchmessergrößeren Bereich der Achswelle 2 ist eine radiale Bohrung 8 eingebracht, über die der Luftaustausch zwischen dem Inneren 10 der Rolle und der Atmosphäre erfolgen kann.

Nachdem die Lagersitze 3 gefräst worden sind, wird der Rollenkörper 1 außen überdreht und dann wird der Rollenkörper 1 ausgewuchtet. Hierzu wird ein Kunststoffschaum 9 in den rotierenden Rollenkörper 1 eingespritzt, der sich infolge der Fliehkräfte an der Innenwandung 1' über die volle axiale Länge anlegt und nach einer gewissen Zeit aushärtet, wobei sich entsprechend der Unwucht die Dicke der Polyurethanschicht 9 unterschiedlich ausbildet. In den Polyurethanschaum können hier nicht näher dargestellte Metallkugeln mit einem Durchmesser von 1,5 mm eingemischt sein. Solche Kugeln werden beispielsweise zum Stahlstrahlen benutzt.

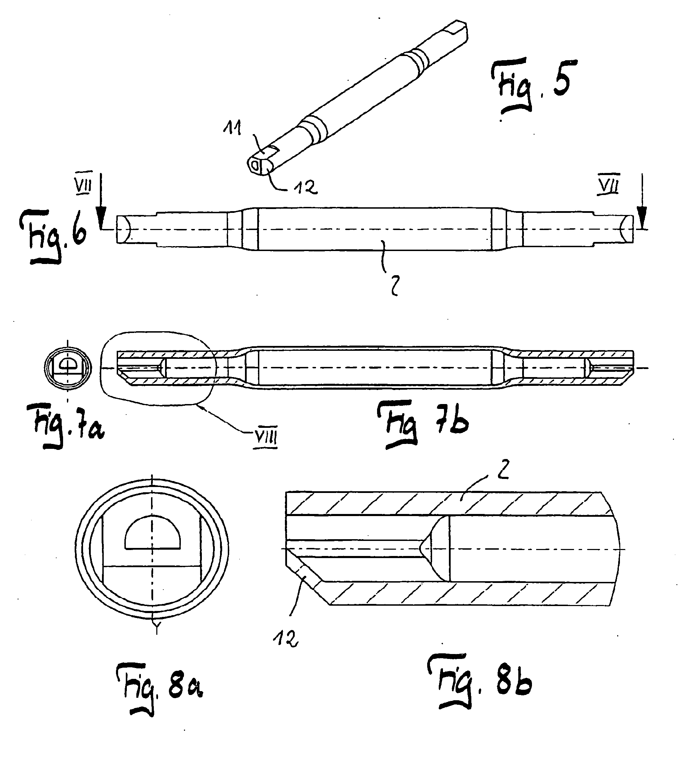

Die Enden der Achswelle 2 weisen zwei diametrale Abflachungen 11 auf, damit die Rolle verdrehsicher in ein hier nicht näher dargestelltes Gestell eingesetzt werden kann. Wie Figuren 5 - 8b zeigen, können die Enden der Achswelle 2 zwischen den Abflachungen 11 einseitig eine radiale Abschrägung 12 aufweisen, die mit den Abflachungen 11 einen "Dreiflach" bilden.

Es ist ersichtlich, dass die Wandstärke der Achswelle 2 im mittleren Bereich dünner ist als an den Enden, in die über die Wälzlager 4a, 4b die Kraft eingeleitet wird. Die unterschiedliche Wandstärke wird dadurch erzielt, dass zunächst ein Rohr mit durchgehend zylindrischen Außendurchmesser und über die Länge konstanter Wandstärke auf einen Dorn aufgesetzt wird und im Bereich, der später der mittlere Bereich der Achswelle 2 ist, die Wandstärke dadurch reduziert wird, dass von außen ein Knetwerkzeug an das Rohr herangefahren wird. Der Innendurchmesser des Rohres bleibt konstant, der mittlere Bereich mit der reduzierten Wandstärke weist einen geringeren Außendurchmesser auf als die Rohrenden mit größerer Wandstärke. Dann wird gegen die Rohrenden von außen ein Werkzeug rotierend angefahren, das das Material nach radial innen umformt, bis die Enden denselben Außendurchmessern aufweisen wie der mittlere Bereich.

### Bezugszeichenliste

- 1: Rollenkörper
- 1': Innenwandung
- 2: Achswelle
- 3: Lagersitz
- 3a: Lagerhalter
- 4a: Wälzlager
- 4b: Wälzlager
- 5: Labyrinthdichtung
- 6: Stützring
- 7: Einstülpung
- 8: Bohrung
- 9: Kunststoffschicht/Polyurethanschicht/Schaum
- 10: Innenraum
- 11: Abflachung
- 12: radiale Schräge

## Patentansprüche

1. Rolle für einen Förderer, insbesondere Gurt- oder Bandförderer, mit einem hohlzylindrischen Rollenkörper (1) und einer in mindestens zwei Lagern (4a, 4b) gelagerten Achswelle (2), wobei die Lager (4a, 4b) in je einem Lagersitz (3) angeordnet sind, **dadurch gekennzeichnet, dass** zur Ausbildung der Lagersitze (3) die Wandung des Rollenkörpers (1) an seinen beiden Enden durch Fließrollen axial nach innen umgeformt ist, wobei die Wandstärke der Wandung im Bereich der Lagersitze (3) zunimmt, und dass die axialen Enden (7) der nach innen umgeformten Wandung nach radial außen auslaufen und einen Stützring (6) ausbilden.

2. Rolle nach Anspruch 1, **dadurch gekennzeichnet, dass** sich die Wandstärke der Wandung im Bereich der Lagersitze (3) mindestens verdoppelt.

3. Rolle nach Anspruch 1 oder 2, **dadurch gekennzeichnet, dass** die Lagersitze (3) spanabhebend bearbeitet sind.

4. Rolle nach einem oder mehreren der vorstehenden Ansprüche, **dadurch gekennzeichnet, dass** die Achswelle (2) hohl ausgebildet ist.

5. Rolle nach Anspruch 4, **dadurch gekennzeichnet, dass** die Achswelle (2) mindestens eine radiale Bohrung (8) aufweist.

6. Rolle nach einem oder mehreren der vorstehenden Ansprüche, **dadurch gekennzeichnet, dass** die Enden der Achswelle (2) mindestens zwei diametrale Abflachungen (11) aufweisen.

7. Rolle nach Anspruch 6, **dadurch gekennzeichnet, dass** die Wandung der Achswelle (2) zwischen zwei Abflachungen (11) zumindest einseitig schräg nach radial innen verläuft.

8. Rolle nach Anspruch 1, **dadurch gekennzeichnet, dass** an der Innenwandung (1') des Rollenkörpers (1) eine Kunststoffschicht (9) vorgesehen ist, die über die volle axiale Länge reicht.

9. Rolle nach Anspruch 8, **dadurch gekennzeichnet, dass** in der Kunststoffschicht (9) Stahlkugeln eingebettet sind.

## Claims

1. A roller for a conveyor, in particular belt conveyor, having a hollow-cylindrical roller body (1) and an axial shaft (2) mounted in at least two bearings (4a, 4b), the bearings (4a, 4b) being arranged in a respective bearing seat (3), **characterized in that**, for the purpose of forming the bearing seats (3), the wall of the roller body (1) is formed axially inwards at its two ends by flow rolling, the wall thickness of the wall increasing in the region of the bearing seats (3) and **in that** the axial ends (7) of the inwardly formed wall diverge radially outwards and form a supporting ring (6).

2. A roller according to claim 1, **characterized in that** the wall thickness of the wall at least doubles in the region of the bearing seats (3).

3. A roller according to either of claims 1 or 2, **characterized in that** the bearing seats (3) are machined.

4. A roller according to any one or more of the preceding claims, **characterized in that** the axial shaft (2) is of hollow design.

5. A roller according to claim 4, **characterized in that** the axial shaft (2) has at least one radial bore (8).

6. A roller according to any one or more of the preceding claims, **characterized in that** the ends of the axial shaft (2) have at least two diametrically arranged flattened portions (11).

7. A roller according to claim 6, **characterized in that** the wall of the axial shaft (2) runs radially inwards in an oblique manner on at least one side between two flattened portions (11).

8. A roller according to claim 1, **characterized in that** a plastic layer (9) is provided on the inner wall (1') of the roller body (1) and extends over the entire axial length.

9. A roller according to claim 8, **characterized in that** steels balls are embedded in the plastic layer (9).

## Revendications

1. Rouleau pour un convoyeur, notamment un convoyeur à courroie ou bande transporteuse comprenant un corps de rouleau (1) cylindrique creux et un arbre axial (2) monté dans au moins deux roulements (4a, 4b), les roulements (4a, 4b) étant disposés chacun dans un siège de roulement (3), **caractérisé en ce que** pour réaliser le siège de roulement (3), la paroi du corps de rouleau (1) est déformée à chacune de ses extrémités axialement vers l'intérieur par fluage par roulage, de sorte que l'épaisseur de la paroi augmente dans la région du siège de roulement (3) et **en ce que** les extrémités axiales (7) de la paroi déformée vers l'intérieur s'étendent radialement vers l'extérieur et forment un anneau de soutien (6).

2. Rouleau selon la revendication 1, **caractérisé en ce que** l'épaisseur de la paroi dans la région du siège de roulement (3) est au moins doublée.

3. Rouleau selon la revendication 1 ou 2, **caractérisé en ce que** les sièges de roulement (3) sont usinés par enlèvement de copeaux.

4. Rouleau selon l'une ou plusieurs des revendications précédentes, **caractérisé en ce que** l'arbre axial (2) est réalisé de façon creuse.

5. Rouleau selon la revendication 4, **caractérisé en ce que** l'arbre axial (2) comporte au moins un alésage radial (8).

6. Rouleau selon l'une ou plusieurs des revendications précédentes, **caractérisé en ce que** les extrémités de l'arbre axial (2) présentent au moins deux méplats diamétraux (11).

7. Rouleau selon la revendication 6, **caractérisé en ce que** la paroi de l'arbre axial (2) entre deux méplats (11) s'étend au moins d'un côté de façon inclinée, radialement vers l'intérieur.

8. Rouleau selon la revendication 1, **caractérisé en ce qu'**une couche de matière synthétique (9) est prévue sur la paroi intérieure (1') du corps de rouleau (1) qui s'étend sur la totalité de la longueur axiale.

9. Rouleau selon la revendication 8, **caractérisé en ce que** des billes d'acier sont noyées dans la matière synthétique (9).
